# EUROPÄISCHE PATENTSCHRIFT

(11) **EP 3 880 982 B1**
(45) Veröffentlichungstag und Bekanntmachung des Hinweises auf die Patenterteilung: **24.08.2022**
(21) Anmeldenummer: 19816515.1
(22) Anmeldetag: 05.11.2019
(51) Int. Cl.: F16D 48/06

(54) **VERFAHREN ZUR BESTIMMUNG EINER KENNLINIE EINER VORRICHTUNG ZUR BETÄTIGUNG EINES BETÄTIGUNGSELEMENTS EINES FAHRZEUGES, VORZUGSWEISE EINES PEDALKRAFTSIMULATORS**
METHOD FOR DETERMINING A CHARACTERISTIC CURVE OF A DEVICE FOR ACTUATING AN ACTUATING ELEMENT OF A VEHICLE, PREFERABLY A PEDAL FORCE SIMULATOR
PROCEDE POUR DETERMINER UNE COURBE CARACTERISTIQUE D'UN DISPOSITIF D'ACTIONNEMENT D'UN ELEMENT D'ACTIONNEMENT D'UN VEHICULE, DE PREFERENCE UN SIMULATEUR DE FORCE DE PEDALAGE

(30) Priorität: 15.11.2018 DE 102018128722
(43) Veröffentlichungstag der Anmeldung: 22.09.2021
(73) Patentinhaber: Schaeffler Technologies AG & Co. KG, 91074 Herzogenaurach (DE)
(72) Erfinder: SCHMITT, Werner, 76547 Sinzheim (DE)
(86) Internationale Anmeldenummer: PCT/DE2019/100953
(87) Internationale Veröffentlichungsnummer: WO 2020/098874

(56) Entgegenhaltungen:
- DE-A1-102010 044 402
- DE-U1-202013 003 648
- US-A1- 2008 215 221

## Beschreibung

Die Erfindung betrifft ein Verfahren zur Bestimmung einer Kennlinie einer Vorrichtung zur Betätigung eines Betätigungselements eines Fahrzeuges, vorzugsweise eines Pedalkraftsimulators, durch welches an dem Betätigungselement eine haptische Rückmeldung über ein vorgegebenes Kraft-Weg-Verhalten vermittelt wird.

Aus der DE 10 2016 218 612 A1 sind eine Reibungskupplungseinrichtung und ein Verfahren zum Betätigen einer Reibungskupplungseinrichtung bekannt. Die Reibungskupplungseinrichtung, die insbesondere für einen Antriebsstrang eines Brennkraftmaschine-getriebenen Kraftfahrzeuges vorgesehen ist, weist eine elektrische Steuereinrichtung, eine Reibungskupplung, eine der Reibungskupplung zugeordnete und mit der Steuereinrichtung signalleitend verbundene erste Aktoreinrichtung, ein Kupplungspedal sowie eine dem Kupplungspedal zugeordnete und mit der Steuereinrichtung signalleitend verbundene Sensoreinrichtung auf, wobei die Reibungskupplungseinrichtung eine dem Kupplungspedal zugeordnete und mit der Steuereinrichtung signalleitend verbundene zweite Aktoreinrichtung aufweist und ein Verfahren zum Betätigen einer derartigen Reibungskupplungseinrichtung, wobei mithilfe der zweiten Aktuatoreinrichtung über das Kupplungspedal ein Signal ausgegeben wird. Insbesondere ist die Reibungskupplungseinrichtung als Clutch-by-wire-System ausgebildet und die zweite Aktuatoreinrichtung stellt einen aktiven Kupplungspedalsimulator dar. Mittels dieses Kupplungspedalsimulators wird der Fahrer auf den Zustand der Kupplung hingewiesen, was durch haptische Veränderungen am Kupplungspedal ermöglicht wird. Um dies zu ermöglichen, muss vorab eine Kennlinie des Kupplungspedalsimulators ermittelt werden, um eine korrekte Funktion während des Betriebes der Kupplung zu gewährleisten. Dokumente DE10 2010 044402 A1, US 2008/215221 A1 und DE 20 2013 003648 U1 offenbaren Verfahren zur Bestimmung einer Kennlinie einer Vorrichtung zur Betätigung eines Betätigungselements eines Fahrzeugs.

Der Erfindung liegt die Aufgabe zugrunde, ein Verfahren zur Bestimmung einer Kennlinie einer Vorrichtung zur Betätigung des Kupplungspedals anzugeben, bei welchem eine zuverlässige Betätigung des Kupplungspedals bei Aufnahme der Kennlinie gewährleistet wird. Erfindungsgemäß ist die Aufgabe dadurch gelöst, dass ein unterer und ein oberer Anschlag des Betätigungselementes durch eine Lernroutine bestimmt wird, wobei der untere und/oder der obere Anschlag des Betätigungselementes mehrfach betätigt wird und die Lernroutine eigenständig prüft, ob der gemessene untere und/oder obere Anschlag innerhalb eines vorgegebenen Toleranzbereiches liegt. Durch die mehrfache Betätigung des Kupplungspedales zur Einstellung des unteren bzw. des oberen Anschlages wird sichergestellt, dass insbesondere auch der untere Anschlag korrekt erreicht wird und deshalb dieser auch gelernt werden kann. Dies wird insbesondere dadurch gewährleistet, dass bei mehrfacher Betätigung des Kupplungspedales die Wahrscheinlichkeit steigt, das der jeweilige Anschlag korrekt betätigt wurde.

Vorteilhafterweise ermittelt die Lernroutine bei jeder Betätigung des Betätigungselementes den jeweiligen von dem Betätigungselement zurückgelegten Maximalweg und gleicht diesen mit dem Toleranzbereich ab. Nur wenn der Maximalweg, der nun mehrfach gemessen wird, innerhalb des Toleranzbereiches liegt, wird die Bestimmung der Kennlinie als abgeschlossen betrachtet. Wird der Toleranzbereich überschritten, erkennt die Lernroutine den Vorgang als fehlerhaft.

In einer Ausgestaltung wird der zurückgelegte Maximalweg durch einen Maximalwert für den oberen Anschlag und einen Minimalwert für den unteren Anschlag gebildet. Durch den Vergleich dieser Maximal- bzw. Minimalwerte lässt sich einfach elektronisch erkennen, ob der obere und/oder auch der untere Anschlag tatsächlich durch die Betätigung des Kupplungspedales erreicht wurden.

In einer Variante weist der Toleranzbereich eine Hysterese auf. Infolge der Hysterese werden geringfügige Abweichungen innerhalb des Maximalwertes für den oberen Anschlag und des Minimalwertes für den unteren Anschlag zugelassen und trotzdem auf die Erreichung des jeweiligen Anschlages geschlossen.

In einer Ausführungsform wird die Anzahl der Betätigungen des Betätigungselementes in der Lernroutine festgelegt. Somit kann die Anzahl der Betätigungen für jeden Typ des Pedalkraftsimulators auf diesen abgestimmt werden.

In einer Weiterbildung ist der in der Lernroutine abgespeicherte Toleranzbereich kalibrierbar, so dass entsprechende Streuungen des Toleranzbereiches entsprechend dem zu testenden Pedalkraftsimulator berücksichtigt werden können.

Vorteilhafterweise wird bei eingehaltenem Toleranzbereich aus den gemessenen Maximalwerten des oberen Anschlages bzw. den gemessenen Minimalwerten des unteren Anschlages jeweils ein Mittelwert gebildet, der abgespeichert wird. Aus den abgespeicherten Mittelwerten wird dann die entsprechende Kennlinie der Vorrichtung zur Betätigung des Betätigungselementes ermittelt.

In einer Ausgestaltung erfolgt die Ermittlung der Kennlinie während einer Inbetriebnahme eines Kupplungsbetätigungssystems, wobei bei durch die Maximal- bzw. Minimalwerte eingehaltenem Toleranzbereich eine Markierung in der Lernroutine gesetzt wird. Mithilfe dieser Markierung wird der Lernvorgang abgeschlossen.

In einer weiteren Ausführungsform wird bei einer Überschreitung des Toleranzbereiches durch die Maximalwerte des oberen Anschlages und/oder die Minimalwerte des unteren Anschlages oder bei Nichteinhaltung der Anzahl der vorgegebenen Betätigungen des Betätigungselementes eine Fehlermeldung ausgegeben. In diesen Fällen muss das Verfahren noch einmal neu gestartet werden.

In einer weiteren Variante wird als Betätigungselement ein Kupplungspedal verwendet, welches zur Erfassung des zurückgelegten Maximalweges mit einer Sensoreinheit in einer Wirkverbindung steht.

Die Erfindung lässt zahlreiche Ausführungsformen zu. Eine davon soll anhand der in der Zeichnung dargestellten Figur näher erläutert werden.

Es zeigt:

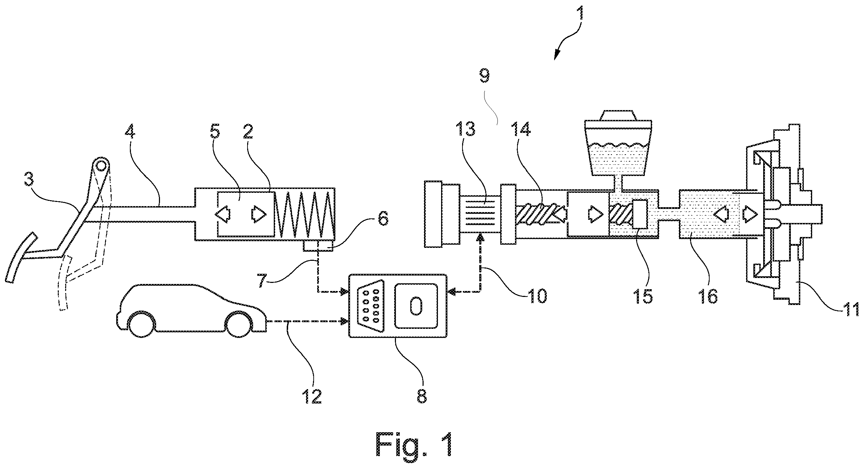

Fig. 1 eine Prinzipdarstellung eines elektro-hydraulischen Kupplungsbetätigungssystems.

In Fig. 1 ist eine Prinzipdarstellung eines elektro-hydraulischen Kupplungsbetätigungssystems dargestellt, welches auch als Clutch-by-wire-System bezeichnet wird. Das elektrohydraulische Kupplungsbetätigungssystem 1 umfasst einen Pedalkraftsimulator 2, der mechanisch mit einem Kupplungspedal 3 verbunden ist. Das Kupplungspedal 3 betätigt über eine Kolbenstange 4 einen, in dem Pedalkraftsimulator 2 axial beweglich gelagerten Kolben 5. Die Bewegung des Kolbens 5 wird von einer Wegsensor-Einheit 6 detektiert, die mit dem Pedalkraftsimulator 2 verbunden und vorzugsweise in diesen integriert ist. Über eine elektrische Leitung 7 ist die Wegsensor-Einheit 6 mit einer Steuereinheit 8 verbunden. Die Steuereinheit 8 ist über eine Leitung 10 mit einen Aktor 9 verbunden, der die Kupplung 11 ansteuert.

Die Wegsensor-Einheit 6 kann aber alternativ auch am Kupplungspedal 3 angeordnet sein. Die Pedalposition wird von der Steuereinheit 8 zusammen mit weiteren Daten, wie Fahrzeugsignale 12, interpretiert. Hieraus wird ein Kupplungsmoment ermittelt, welches durch einen Elektromotor 13 mit Spindeltrieb 14 eingestellt wird und durch dessen Bewegung über Geber-15 und Nehmerzylinder 16 auf die Kupplung 11 übertragen wird.

Bei einem solchen Kupplungsbetätigungssystem 1 muss vorab im Rahmen der Inbetriebnahme die Kennlinie des Pedalkraftsimulators 2 oder des Kupplungspedals 3 ermittelt werden. Dazu wird die Steuereinheit 8 mit einem nicht weiter dargestellten externen Tester verbunden, welcher eine Lernroutine umfasst. In der Lernroutine ist die Anzahl der benötigten Betätigungen des Kupplungspedals 3 zur Erfassung eines Maximalwertes bzw. eines Minimalwertes des durch das Kupplungspedal 3 bzw. des Pedalkraftsimulators 2 zurückgelegten Maximalweges abgespeichert. Gleichzeitig ist ein Toleranzbereich in Form einer geringen Hysterese abgelegt, um zugelassene Streuungen bei der Bestimmung von Maximal- bzw. Minimalwerte des Maximalweges des Kupplungspedals 3 zu erlauben. Die Anzahl der benötigten Betätigungen bzw. die zugelassene Streuung wird dabei je nach zu prüfendem Pedalkraftsimulator 2 in der Lernroutine festgelegt.

Nach dem Starten der Lernroutine durch den externen Tester betätigt ein Bediener das Kupplungspedal 3 entsprechend der in der Lernroutine vorgesehenen Vorgabe, beispielsweise zweimal. Das bedeutet, dass das Kupplungspedal 3 gedrückt, losgelassen, nochmals gedrückt und wieder losgelassen wird. Dabei werden zwei Minimalwerte für den unteren Anschlag und zwei Maximalwerte für den oberen Anschlag des Kupplungspedals 3 durch die Wegsensor-Einheit 6 ermittelt und der Steuereinheit 8 zugeführt. Anschließend wird geprüft, ob durch diese Minimal- bzw. Maximalwerte ein Toleranzbereich verletzt wird. Bei eingehaltenem Toleranzbereich werden aus den jeweils zwei Minimalwerten und den jeweils zwei Maximalwerten Mittelwerte der Position für den oberen und den unteren Anschlag berechnet und in der Steuereinheit 8 abgespeichert. Anschließend wird durch die Steuereinheit 8 in der Lernroutine ein End-off-Line-Flag gesetzt, was verdeutlicht, dass die Lernroutine erfolgreich abgeschlossen ist. Wird durch die Steuereinheit 8 detektiert, dass die Toleranzbereiche überschritten sind, wird eine Fehlermeldung ausgegeben. Die Fehlermeldung wird ebenfalls ausgegeben, wenn nicht die vorgegebene Anzahl der Betätigungen des Kupplungspedals 3 durch den Bediener erfolgt ist, da somit keine zuverlässige Aussage über die Erfassung des oberen und des unteren Anschlages möglich ist.

Aus den bei positiver Bewertung der Maximal- bzw. Minimalwerte gebildeten Mittelwerten wird dann in der Steuereinheit 8 die Kennlinie des Pedalkraftsimulators 2 eingestellt und für den weiteren Betrieb des Kupplungsbetätigungssystems 1 zur Verfügung gestellt.

### Bezugszeichenliste

- 1: Kupplungsbetätigungssystem
- 2: Pedalkraftsimulator
- 3: Kupplungspedal
- 4: Kolbenstange
- 5: Kolben
- 6: Wegsensor-Einheit
- 7: Elektrische Leitung
- 8: Steuereinheit
- 9: Aktor
- 10: Leitung
- 11: Kupplung
- 12: Fahrzeugsignale
- 13: Elektromotor
- 14: Spindeltrieb
- 15: Geberzylinder
- 16: Nehmerzylinder

## Patentansprüche

1. Verfahren zur Bestimmung einer Kennlinie einer Vorrichtung zur Betätigung eines Betätigungselements eines Fahrzeuges, vorzugsweise eines Pedalkraftsimulators, durch welche an dem Betätigungselement (3) eine haptische Rückmeldung über ein vorgegebenes Kraft-Weg-Verhalten vermittelt wird, **dadurch gekennzeichnet, dass** ein unterer und ein oberer Anschlag des Betätigungselementes (3) durch eine Lernroutine bestimmt wird, wobei der untere und/oder der obere Anschlag des Betätigungselementes (3) mehrfach betätigt wird und die Lernroutine eigenständig prüft, ob der gemessene untere und/oder obere Anschlag innerhalb einem vorgegebenen Toleranzbereich liegt.

2. Verfahren nach Anspruch 1, **dadurch gekennzeichnet, dass** die Lernroutine bei jeder Betätigung des Betätigungselementes (3) den jeweiligen von dem Betätigungselement (3) zurückgelegten Maximalweg ermittelt und diesen mit dem Toleranzbereich abgleicht.

3. Verfahren nach Anspruch 1 oder 2, **dadurch gekennzeichnet, dass** der zurückgelegte Maximalweg durch einen Maximalwert für den oberen Anschlag und einen Minimalwert für den unteren Anschlag gebildet wird.

4. Verfahren nach Anspruch 1, 2 oder 3, **dadurch gekennzeichnet, dass** der Toleranzbereich eine Hysterese aufweist.

5. Verfahren nach mindestens einem der vorhergehenden Ansprüche, **dadurch gekennzeichnet, dass** die Anzahl der Betätigungen des Betätigungselementes (3) in der Lernroutine festgelegt wird.

6. Verfahren nach mindestens einem der vorhergehenden Ansprüche, **dadurch gekennzeichnet, dass** der in der Lernroutine abgespeicherte Toleranzbereich kalibrierbar ist.

7. Verfahren nach mindestens einem der vorhergehenden Ansprüche, **dadurch gekennzeichnet, dass** bei eingehaltenem Toleranzbereich aus den gemessenen Maximalwerten des oberen Anschlages bzw. den gemessenen Minimalwerten des unteren Anschlages jeweils ein Mittelwert gebildet wird, der abgespeichert wird.

8. Verfahren nach mindestens einem der vorhergehenden Ansprüche, **dadurch gekennzeichnet, dass** die Ermittlung der Kennlinie während einer Inbetriebnahme eines Kupplungsbetätigungssystems (1) erfolgt, wobei bei durch den Maximalweg eingehaltenem Toleranzbereich eine Markierung in der Lernroutine gesetzt wird.

9. Verfahren nach mindestens einem der vorhergehenden Ansprüche, **dadurch gekennzeichnet, dass** bei einer Überschreitung des Toleranzbereiches durch die Maximalwerte des oberen und/oder die Minimalwerte des unteren Anschlages oder bei Nichteinhaltung der Anzahl der vorgegebenen Betätigung des Betätigungselementes (3) eine Fehlermeldung ausgegeben wird.

10. Verfahren nach mindestens einem der vorhergehenden Ansprüche, **dadurch gekennzeichnet, dass** als Betätigungselement ein Kupplungspedal (3) verwendet wird, welches zur Erfassung des zurückgelegten Maximalweges mit einer Sensoreinheit (6) in einer Wirkverbindung steht.

## Claims

1. A method for determining a characteristic curve of a device for actuating an actuating element of a vehicle, preferably a pedal force simulator, via which a haptic response is conveyed via a predefined force-path behaviour on the actuating element (3), **characterized in that** a lower and an upper end stop of the actuating element (3) is determined by a learning routine, wherein the lower and/or the upper end stop of the actuating element (3) is actuated multiple times and the learning routine independently checks whether the measured lower and/or upper end stop lies within a predefined tolerance range.

2. The method according to claim 1, **characterized in that** the learning routine calculates the respective maximum path travelled by the actuating element (3) with each actuation of the actuating element (3) and aligns said path with the tolerance range.

3. The method according to claim 1 or 2, **characterized in that** the maximum path travelled is formed by a maximum value for the upper end stop and a minimum value for the lower end stop.

4. The method according to claim 1, 2 or 3, **characterized in that** the tolerance range has a hysteresis.

5. The method according to at least one of the preceding claims, **characterized in that** the number of actuations of the actuating element (3) is determined in the learning routine.

6. The method according to at least one of the preceding claims, **characterized in that** the tolerance range stored in the learning routine can be calibrated.

7. The method according to at least one of the preceding claims, **characterized in that** when the tolerance range is observed, one average value respectively is formed from the measured maximum values of the upper end stop and the measured minimum values of the lower end stop, which is stored.

8. The method according to at least one of the preceding claims, **characterized in that** the calculation of the characteristic curve during commissioning of a coupling actuation system (1) is conducted, wherein a marker is set in the learning routing when the tolerance range is observed by the maximum path.

9. The method according to at least one of the preceding claims, **characterized in that** when the tolerance range is exceeded by the maximum values of the upper end stop and/or the minimum values of the lower end stop, or when the number of predefined actuations of the actuating element (3) is not observed, an error warning is issued.

10. The method according to at least one of the preceding claims, **characterized in that** a coupling pedal (3) is used as an actuating element, which is actively connected to a sensor unit (6) in order to record the maximum path travelled.

## Revendications

1. Procédé pour déterminer une courbe caractéristique d un dispositif d actionnement d un élément d actionnement d un véhicule, de préférence un simulateur de force de pédalage, au moyen duquel un retour haptique concernant un comportement force-déplacement prédéfini est transmis à l élément d actionnement (3), **caractérisé en ce qu** une butée inférieure et une butée supérieure de l élément d actionnement (3) sont déterminées par une routine d apprentissage, la butée inférieure et/ou supérieure de l élément d actionnement (3) étant actionnée plusieurs fois et la routine d apprentissage vérifiant indépendamment si la butée inférieure et/ou supérieure mesurée se situe dans une plage de tolérance prédéfinie.

2. Procédé selon la revendication 1, **caractérisé en ce que** la routine d apprentissage détermine la distance maximale respective parcourue par l élément d actionnement (3) à chaque actionnement de l élément d actionnement (3) et la compare à la plage de tolérance.

3. Procédé selon la revendication 1 ou 2, **caractérisé en ce que** la distance maximale parcourue est formée par une valeur maximale pour la butée supérieure et par une valeur minimale pour la butée inférieure.

4. Procédé selon la revendication 1, 2 ou 3, **caractérisé en ce que** la plage de tolérance présente une hystérésis.

5. Procédé selon au moins l une quelconque des revendications précédentes, **caractérisé en ce que** le nombre d actionnements de l élément d actionnement (3) est défini dans la routine d apprentissage.

6. Procédé selon au moins l une quelconque des revendications précédentes, **caractérisé en ce que** la plage de tolérance enregistrée dans la routine d apprentissage peut être étalonnée.

7. Procédé selon au moins l une quelconque des revendications précédentes, **caractérisé en ce que** lorsque la plage de tolérance est maintenue, une valeur moyenne est formée à partir des valeurs maximales mesurées de la butée supérieure ou à partir des valeurs minimales mesurées de la butée inférieure, puis enregistrée.

8. Procédé selon au moins l une quelconque des revendications précédentes, **caractérisé en ce que** la courbe caractéristique est déterminée pendant un démarrage d un système d actionnement d embrayage (1), un repère étant défini dans la routine d apprentissage lorsque la plage de tolérance est maintenue par la distance maximale.

9. Procédé selon au moins l une quelconque des revendications précédentes, **caractérisé en ce qu** un message d erreur est émis en cas de dépassement de la plage de tolérance par les valeurs maximales de la butée supérieure et/ou par les valeurs minimales de la butée inférieure ou en cas de non-respect du nombre d actionnements spécifiés de l élément d actionnement (3).

10. Procédé selon au moins l une quelconque des revendications précédentes, **caractérisé en ce qu** une pédale d embrayage (3) est utilisée comme élément d actionnement, laquelle est en liaison active avec une unité de capteur (6) pour détecter la distance maximale parcourue.
